# EUROPEAN PATENT APPLICATION

(11) **EP 0 598 951 A1**
(43) Date of publication of application: **01.06.1994**
(21) Application number: 92203666.0
(22) Date of filing: 27.11.1992
(51) Int. Cl.: E05F 15/00, E05F 15/16

(54) **An electro-mechanically driven motor vehicle servomechanism control and operating system**

(71) Applicant: A.J. FONSECA, LDA, 4100 Oporto (PT)
(72) Inventor: Da Fonseca, Antonio Jose, PT-4100 Oporto (PT)
(74) Representative: Alonso Langle, Emilio

(57) **Abstract**

The invention consists of a unit for the control and operation of electro-mechanically driven servomechanisms for motor vehicles which makes it possible to complete a full stroke, in phases, for the closing of windows and/or a convertible roof, with a partial reversal whenever one or more presence sensors note a movement inside our outside which may interfere with the action of the element being operated. The electro-mechanisms are controlled by a microprocessor (1) which can be activated directly or automatically when the sensors (3) establish that the vehicle has been left and there is no activity detected inside or around it.

## Description

### SUBJECT OF THE INVENTION

The subject of this invention is a unit for the control and operation of electro-mechanically driven servomechanisms, especially designed for motor vehicles, which automatically or selectively controls the windows and the roof in the case of convertibles, or the opening known as the sun-roof.

Specifically, the invention is of particular use on vehicles fitted with an automatic window closing device operated from a remote drive by any known method.

### THE STATE OF THE ART

The automatic or selective electro-mechanical operation of windows and moving parts such as sun-roof or bonnet is familiar, and a variety of motor vehicle manufacturers use it as standard or optional fitting, e.g. motor vehicles made by FIAT, VOLVO, etc.

There is also accessory equipment on the market, such as anti-theft alarms, whose functions incorporate window closure, lifting of the bonnet, the closing of the sun-roof or of the doors, etc.

In all cases, the operation is by continuous cycle, i.e. startup and stop when the cycle has been completed.

If an obstacle arises, stop devices come into action which do no more than limit the torque, operating a clutch so that the motor freewheels and stops.

If the torque limiter is very high, a problem arises insofar as it allows movement in the opposite direction, e.g. a window opens when pressed downwards so that the vehicle is vulnerable even if it carries an alarm.

On the other hand, if the torque limiter is very low, the power of the motor operating the window may cause major injury, particularly to children, because of its lack of sensitivity. It is therefore operationally inadequate.

### DESCRIPTION OF THE INVENTION

The invention resolves the problem raised and eliminates the need to regulate and even to fit motors for windows, roof, bonnet, seats, etc. with torque limiters which may be inoperative or may cause accidents.

According to the invention, the closing stroke or movement of, for example, windows and sun roof, takes place in stages, with an interval for completion of the action in three or more phases: however, the advantage of the invention and, therefore, the inventive activity lies in the fact that each upward or forward phase is followed by a descent or movement in the opposite direction with a stroke or path which is several times shorter and followed, within a timed cycle, by a new advance, until the closing action is completed. Said phase, upward or forward, with a return, is selected automatically when anyone is present inside the vehicle.

On the other hand, if there is no-one in the vehicle, the moving devices advance only in one direction, and by phases, although they may do so continuously. However, in these circumstances, no self-correction is possible because of the presence outside of someone entering through the opening: in phase operation, a check can be made prior to each advance, following the first stage, so that an unexpected intrusion following operation of the remote control elements would make it possible to prevent a dangerous situation.

To attain this effect, the motor governor devices operate by means of positive tension or continuous advance, followed after the necessary timing, if any, by another movement, of shorter duration and inverse polarity, i.e. backwards, as already explained over a shorter stroke than the forward movement.

However, none of this is possible in the absence of elements to detect the presence of persons, combined with a microprocessor with sensor devices which can inform the microprocessor that the vehicle has been left by the user.

In other words, the fact that the doors, bonnet or boot are open, the engine running, or the lights, fan, radio, etc. are on, will be detected by the pertinent sensor, which reports to the microprocessor that there is an active presence in the vehicle: consequently, the microprocessor will not automatically set a sequence to close windows, sun-roof or bonnet in operation.

Alternatively, there may be a direct order to operate, following which the closing sequence is initiated without taking account of any factor other than the presence of persons in the vehicle: in all cases, following each phase, a search will take place for persons before a further advance can follow, first giving a withdrawal command then, after timing, another advance, if any person is present. If there is no-one, the advance is non-stop.

The stop time is a period for search, sweep or detection, while the timed interval between reverse and a new advance is a safety period.

It is clear therefore that the vehicle's own system for closing windows, roof, etc., whether fitted in series or added later, is used to incorporate this invention.

It is also clear that the equipment as a whole can be fitted either in series or subsequently added to an anti-theft system of any degree of sophistication and performance without placing any limitation on the invention.

### DESCRIPTION OF THE DRAWINGS

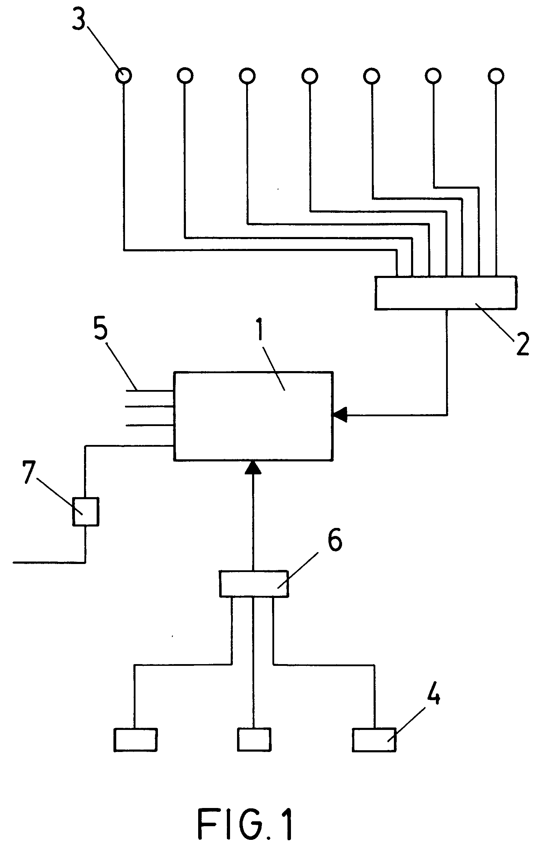

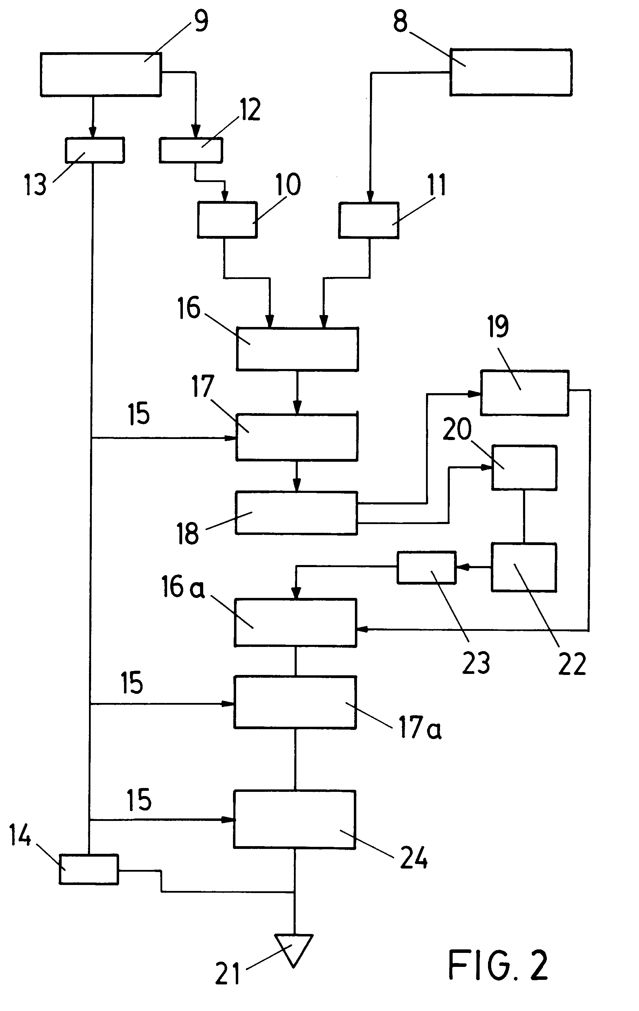

Figure 1 shows a block diagram summarising the subject of this invention. Separately, figure 2 is a flow-chart of its operation.

### DESCRIPTION OF A PREFERENTIAL DESIGN

From a microprocessor (1) an interface (2) is used to connect a set of contact sensors (3) of any type, although those of FAE have been shown to be effective.

The microprocessor must be the one originally fitted to the vehicle, if included or, for example a TMS77C82 unit of TEXAS INSTRUMENTS which is on the market in competition with others.

The microprocessor (1) has an interface data input (6) from sensors (4) which may be capacitive, microwave, Doppler ultrasound or any other type for the detection of a presence (e.g., in practice, the microwave models ref. DVM 2200 of MARCONI INSTRUMENTS, or the MASTER GUARDIAN Prestige Model ultrasound type alarm, used successfully because of their reliability).

In addition, the microprocessor (1) has a number of outputs (5) which, through power stages (7), activate the drive elements of the different components to be operated.

The appropriate program data are entered in the fixed memories of the microprocessor (1), using conventional methods, in order to carry out the operation required by the invention.

The operating sequences can be initiated in two ways. Under option (8), operation is automatic, while with option (9) such action is voluntary, i.e. by direct and intentional command.

In either case, there is an initial delay, with timers (10 and 11) which are adjusted differently for each case: in the former case (10), this can be direct or with a short interval, while in the latter (11) timing can be adjusted, for example, and by way of illustration only, between 0.5 and 5 minutes.

For voluntary operation, there is an activation device (12) and a stop or off device (13). The stop cuts off operation at any stage (15) of advance and always commands a reverse movement (14): however, optionally, for reasons of cost and simplification of the equipment, this final operation, following stop, can be eliminated.

Otherwise, in automatic operation, the sensors (3) advise the microprocessor that the doors, bonnet, boot, etc. are in order, there is no movement in the vehicle, the system is not being operated from inside or outside, and they confirm to the microprocessor that it can initialise the timer (11).

Any activation of the senors (3) during timing (10 and 11) cuts off the counting sequence and returns to operational onset (8).

Once the timed phase is over (11) the microprocessor (1) issues the order (16) to activate the motors, and this takes place through the outputs (5) and power stages (7).

After a period which takes the form of a forward movement of the mechanism operated (windows, sun roof, etc.), stop (17) and monitoring (18) are automatic.

Either variant (19 or 20) occurs following monitoring: in the former, if at the end of the search with the sensors no-one is detected inside the vehicle, the motors (16a) are operated, the stop (17a) is repeated, monitoring is repeated, and the cycle (24) recurs as often as necessary to complete the full movement in the finished operation (21).

In variant (20) the sensors detect and confirm the presence of someone in the interior and, following a backward stroke (22) shorter than the forward movement, there is a non-operative safety period (23) designed to remove or cause the removal of any part of the person or object, inside or outside, which interferes with the forward movement of the device being operated.

After the timed safety period (23) the motors (16a) are operated and the cycle is repeated: however, any voluntary order will stop the operation, with or without a subsequent reverse movement, when the order (15) reaches stages (17 and 17a) and the subsequent stages, until the last one which completes the number of cycles.

It is not felt necessary to further extend this explanation in order for an expert in the field to grasp the scope of the invention and, according to his technical knowledge, put it into practice in a design which does not change essentially even though, in practice, it may seem to do so.

## Claims

1. A unit for the control and operation of electro-mechanically driven servomechanisms for motor vehicles, with remote-controlled drive elements at least for closing windows and a convertible top or sun roof, wherein elements are incorporated for confirming that the vehicle has been left, and resources are provided for the reception of this information, along with data processing devices and the components to operate the servo-mechanisms, dividing the complete operational drive stroke into phases with stops, monitoring in search of a live presence, and a partial reversal of the forward movements in each phase if such live presence is detected, with the phases following continuously until completing the operation, if no stop order is introduced using standard remote control devices.

2. A unit for the control and operation of electro-mechanically driven servomechanisms for motor vehicles as set forth in the previous claim, wherein the phases, their advance, and the drive operation of each of the servomechanisms is controlled by a microprocessor operating in response to sensors designed to detect a living presence.

3. A unit for the control and operation of electro-mechanically driven servomechanisms for motor vehicles as set forth in claim 1, wherein the microprocessor is operated by a direct order or by automatic devices on the basis of the absence of active intervention at any internal or external point of the vehicle, such absence of intervention being determined by the elements used to confirm that the vehicle has been left.

4. A unit for the control and operation of electro-mechanically driven servomechanisms for motor vehicles as set forth in claims 3 and 4, wherein the elements confirming that the vehicle has been left comprise sensors located on doors, the convertible roof, bonnet, boot, hood, lights radios or any element used inside or outside the vehicle.

5. A unit for the control and operation of electro-mechanically driven servomechanisms for motor vehicles as set forth in claim 1, wherein the sensors for detecting a presence must be able to detect such presence of a person at rest.

6. A unit for the control and operation of electro-mechanically driven servomechanisms for motor vehicles as set forth in claims 1 and 2, wherein each operating phase generates a monitoring process to detect a presence and, following each such detection, a reversal from the position reached by the element being operated.

7. A unit for the control and operation of electro-mechanically driven servomechanisms for motor vehicles as set forth in claim 1, wherein the automatic activation sequence takes place following timing which resets to zero whenever a contact sensor is activated.

8. A unit for the control and operation of electro-mechanically driven servomechanisms for motor vehicles as set forth in claim 1, wherein each monitoring detection phase generates a timing process, following reversal, before beginning a new advance.
